# EUROPÄISCHE PATENTANMELDUNG

(11) **EP 4 632 258 A1**
(43) Veröffentlichungstag der Anmeldung: **15.10.2025**
(21) Anmeldenummer: 24169012.2
(22) Anmeldetag: 08.04.2024
(51) Int. Cl.: F16L 37/08, E02F 3/36, F16L 37/56

(54) **MANUELL BETÄTIGBARE HYDRAULIKKUPPLUNG**

(71) Anmelder: Riedlberger, Markus, 85302 Singenbach (DE)
(72) Erfinder: Riedlberger, Markus, 85302 Singenbach (DE)
(74) Vertreter: Wunderlich & Heim Patentanwälte PartG mbB

(57) **Zusammenfassung**

Die Erfindung betrifft eine manuell betätigbare Hydraulikkupplung mit einem stationären ersten Kupplungsteil mit mindestens einem ersten männlichen oder weiblichen Leitungsstecker, der mit einer Druckfluidleitung verbunden ist, einem beweglichen zweiten Kupplungsteil mit mindestens einem zweiten weiblichen beziehungsweise männlichem Leitungsstecker, der mit einer Druckfluidleitung verbunden ist und passend zum ersten Leitungsstecker ausgebildet ist, wobei in einem zusammengesteckten Zustand über die beiden Leitungsstecker eine Leitungsverbindung zwischen der jeweiligen Druckfluidleitung gebildet ist, und einer Stelleinrichtung, mit welcher die beiden Kupplungsteile von einer Bedienperson zwischen einer Aufsatzposition, bei welcher das bewegbare zweite Kupplungsteil von Hand auf das erste Kupplungsteil mit fluchtenden Leitungssteckern aufgesetzt ist, und einer Verbindungsposition verstellbar ist, in welcher die beiden Kupplungsteile aufeinander zugestellt und der mindestens eine erste Leitungsstecker mit dem mindestens einen zweiten Leitungsstecker zum Bilden der Leitungsverbindung zusammengesteckt sind. Nach der Erfindung ist vorgesehen, dass die Stelleinrichtung mindestens ein Stellglied aufweist, welches verschiebbar zu dem ersten Kupplungsteil gelagert ist und an welchem das zweite Kupplungsteil in der Aufsatzposition angelegt ist, und dass die Stelleinrichtung mindestens eine Stellschraube aufweist, mit welcher zum Bilden der Leitungsverbindung zwischen den Druckfluidleitungen das Stellglied mit dem anliegenden zweiten Kupplungsteil durch eine Schraubbewegung von der Aufsatzposition in die Verbindungsposition verstellbar ist.

## Beschreibung

Die Erfindung betrifft eine manuell betätigbare Hydraulikkupplung mit einem stationären ersten Kupplungsteil mit mindestens einem ersten männlichen oder weiblichen Leitungsstecker, der mit einer Druckfluidleitung verbunden ist, einem beweglichen zweiten Kupplungsteil mit mindestens einem zweiten weiblichen beziehungsweise männlichem Leitungsstecker, der mit einer Druckfluidleitung verbunden ist und passend zum ersten Leitungsstecker ausgebildet ist, wobei in einem zusammengesteckten Zustand über die beiden Leitungsstecker eine Leitungsverbindung zwischen der jeweiligen Druckfluidleitung gebildet ist, und einer Stelleinrichtung, mit welcher die beiden Kupplungsteile von einer Bedienperson zwischen einer Aufsatzposition, bei welcher das bewegbare zweite Kupplungsteil von Hand auf das erste Kupplungsteil mit fluchtenden Leitungssteckern aufgesetzt ist, und einer Verbindungsposition verstellbar ist, in welcher die beiden Kupplungsteile aufeinander zugestellt und der mindestens eine erste Leitungsstecker mit dem mindestens einen zweiten Leitungsstecker zum Bilden der Leitungsverbindung zusammengesteckt sind, gemäß dem Oberbegriff des Anspruchs 1 .

Hydraulikkupplungen werden im Bereich der Technik vielfältig eingesetzt, etwa wenn ein hydraulisch betätigtes Werkzeug an ein Grundgerät oder eine Grundmaschine mit der Hydraulikversorgung angeschlossen wird. Wie beispielsweise aus der EP 0 918 186 B1 oder der EP 0 202 798 A bekannt ist, können solche Hydraulikkupplungen männliche und korrespondierende weibliche Leitungsstecker aufweisen, welche vorzugsweise durch eine federvorgespannte Verschlusseinrichtung im getrennten Zustand die jeweils angrenzende Druckleitung druckdicht verschließen. Beim Zusammenstecken der korrespondierenden Leitungstecker öffnen sich die jeweiligen Verschlusseinrichtungen und eine Leitungsverbindung wird zwischen jeweiligen Druckleitungen hergestellt.

Der hydraulische Druck kann in den Leitungen, je nach Anwendungsfall, relativ hoch sein und bis zu mehreren 100 bar betragen. Bei einem Zusammenstecken der Leitungsstecker sind die entsprechenden Federkräfte und die anliegenden Fluiddrucckräfte zu überwinden. Durch ein rein manuelles Zusammenstecken ist dies kaum zu erreichen.

Aus der gattungsbildenden DE 42 22 193 C2 ist eine manuell betätigbare Hydraulickupplung bekannt, bei welcher die beiden Kupplungsteile mittels einer Stelleinrichtung zusammensteckbar sind, welche einen Spannhebel aufweist. Der Spannhebel ist an einem Kupplungsteil angeordnet und weist einen kurvenförmigen Eingriffsschlitz auf. Dieser kann bei einem Verdrehen des Spannhebels um ein Drehlager mit einem seitlich vorstehenden Spannzapfen an dem anderen Kupplungsteil in Eingriff gelangen. Durch die Gestaltung und Anordnung des Eingriffsschlitzes kann ein aufgesetztes Kupplungsteil axial an das andere Kupplungsteil zugestellt und angedrückt sowie entsprechend den aufgebrachten Hebelkräften die korrespondierenden Leitungsstecker ineinandergesteckt werden, um eine oder mehrere Hydraulikverbindungen zu schließen.

Durch den kurvenförmigen Eingriffsschlitz kann eine Drehbewegung des Spannhebels in eine etwa lineare Stellbewegung umgesetzt werden. Allerdings können hierbei auf die relativ empfindlichen Verschlusselemente in den Leitungssteckern unerwünschte Querkräfte aufgebracht werden. Hierdurch kann die Funktionsfähigkeit und insbesondere die Dichtigkeit der Leitungsstecker über einen längeren Gebrauch beeinträchtigt werden. Zum Aufbringen größerer Stellkräfte müsste der Hebelarm entsprechend verlängert werden. Dies benötigt zusätzlichen Bauraum, der häufig nicht zur Verfügung steht oder zu einer insgesamt sperrigen Vorrichtung führt.

Der Erfindung liegt die **Aufgabe** zugrunde, eine manuell betätigbare Hydraulickupplung anzugeben, welche bei einem einfachen und kompakten Aufbau besonders effizient und zuverlässig betätigt werden kann.

Die Aufgabe wird nach der Erfindung durch eine manuell betätigbare Hydraulikkupplung mit den Merkmalen des Anspruchs 1 gelöst. Bevorzugte Ausführungsformen der Erfindung sind in den abhängigen Ansprüchen angegeben.

Nach der Erfindung ist bei der manuell betätigbaren Hydraulikkupplung vorgesehen, dass die Stelleinrichtung mindestens ein Stellglied aufweist, welches verschiebbar zu dem ersten Kupplungsteil gelagert ist und an welchem das zweite Kupplungsteil in der Aufsatzposition anlegbar ist, und dass die Stelleinrichtung mindestens eine Stellschraube aufweist, mit welcher zum Bilden der Leitungsverbindung zwischen den Druckleitungen das Stellglied mit dem anliegenden zweiten Kupplungsteil durch eine Schraubbewegung von der Aufsatzposition in die Verbindungsposition verstellbar ist.

Gemäß einem ersten Aspekt der Erfindung umfasst die Stelleinrichtung mindestens ein Stellglied, insbesondere eine Stellplatte, welche zu und vorzugsweise unmittelbar an dem ersten Kupplungsteil verschiebbar gelagert ist. An das Stellglied kann das zweite Kupplungsteil in einer Aufsatzposition angelegt oder angesetzt werden. Das zweite Kupplungsteil, welches etwa mit einem Werkzeug über eine flexible Schlauchleitung verbunden ist, kann manuell an das Stellglied angelegt werden. Das zweite Kupplungsteil kann dabei unmittelbar an das vorzugsweise plattenförmige Stellglied angelegt oder zunächst auf das andere, vorzugsweise am Grundgerät angeordnete Kupplungsteil aufgesetzt und dann das Stellglied zum Anlegen zugestellt werden. Das mindestens eine Stellglied mit dem anliegenden Kupplungsteil kann mit mindestens einer Stellschraube kann von der Aufsatzposition in die Verbindungsposition verstellt werden, in welcher die korrespondierenden Leitungsstecker zum Bilden einer Leitungsverbindung miteinander verbunden sind.

Durch die verschiebbare Anordnung und Lagerung eines Stellglied werden die Verbindungskräfte nicht unmittelbar, sondern nur über das Stellglied in das anzuschließende zweite Kupplungsteil eingetragen. Dies schon das Kupplungsteil und ermöglicht eine gezieltere Führung und Krafteinleitung in das Kupplungsteil.

Die Zustellkraft wird dabei über mindestens eine, vorzugsweise eine einzige, Stellschraube erzeugt, welche vorzugsweise parallel zur Verbindungs- oder Steckrichtung der beiden Kupplungsteile gerichtet ist. Das anzuschließende zweite Kupplungsteil kann manuell an das mindestens eine Stellglied angelegt oder angesetzt werden.

Anschließend kann durch Betätigen der mindestens einen Stellschraube die Kupplungsverbindung geschlossen werden. Dabei kann über die Stellschraube ein Schraubdrehmoment angelegt und in eine axiale Stellkraft umgesetzt werden. Diese kann über das verschiebbar gelagerte Stellglied gezielt und damit besonders schonend auf die Kupplungsteile und die daran angeordneten Leitungsstecker übertragen werden. Die Kraftübertragung mittels mindestens einer Stellschraube kann in einfacher und effizienter Weise erfolgen, wobei je nach Gestaltung des Schraubgewindes auch sehr hohe Stellkräfte in einfacher Weise aufgebracht werden können.

In Sinne der Erfindung ist die erfindungsgemäße Hydraulikkupplung nicht auf eine Verbindung von Hydraulikölleitungen beschränkt, sondern umfasst auch ein Kuppeln von Leitungen für andere Druckfluiden oder Medien, insbesondere Wasser, Druckluft sowie andere Flüssigkeiten und Gase, welche zur Energieübertragung unter Druck einsetzbar sind. In grundsätzlich bekannter Weise können neben den Druckleitungen mit der Kupplung auch weitere Leitung gekuppelt werden, etwa Strom- und/oder Datenleitungen.

Eine bevorzugte Ausführungsform der Erfindung besteht darin, dass die mindestens eine Stellschraube in ein Gewindeloch an dem ersten Kupplungsteil eingreift und sich durch ein Durchgangsloch an dem Stellglied erstreckt, wobei ein Kopfbereich der Stellschraube zum Betätigen der Stellschraube an einer Oberseite des Stellgliedes freiliegt. Vorzugsweise ist die Stellschraube in einem Mittenbereich an dem Stellglied beziehungsweise zu den beiden Kupplungsteilen angeordnet.

Am Kopfbereich der Stellschraube kann ein üblicher polygonaler Schraubenkopf oder Schraubflügel für eine unmittelbare Handbetätigung angeordnet sein. Besonders zweckmäßig ist es nach einer Ausführungsvariante der Erfindung, dass ein Schaftbereich der Schraube, insbesondere zwischen dem Gewindeloch und der Stellplatte oder einem Kopfbereich der Stellschraube, durch eine Umfangsabdeckung abgedeckt ist. Damit ist der Gewindebereich der Schraube und auch des korrespondierenden Gewindelochs vor Umgebungseinflüssen geschützt, insbesondere vor dem Eindringen von Feuchtigkeit und Schmutz. Dies verbessert die Funktionsfähigkeit und erhöht die Lebensdauer der Hydraulikkupplung.

Grundsätzlich kann die Umfangsabdeckung, welche sich hülsenartig um zumindest einen Abschnitt der Stellschraube erstreckt, in jeder beliebigen und geeigneten Weise ausgeführt sein. Besonders zweckmäßig ist es nach einer Ausführungsform der Erfindung, dass die Umfangsabdeckung durch eine Teleskophülsenanordnung gebildet ist. Die Teleskophülsenanordnung kann zwei oder mehrere starre Hülsen, vorzugsweise aus Metall oder Kunststoff, aufweisen, welche axial ineinander schiebbar sind.

Besonders vorteilhaft ist es nach einer Weiterbildung der Erfindung, dass die Teleskophülsenanordnung eine feststehende erste Hülse, welche an dem ersten Kupplungsteil angebracht ist, und mindestens eine dazu bewegliche zweite Hülse aufweist, welche sich zum Kopfbereich der Stellschraube erstreckt. Dies erlaubt eine besonders stabile Umfangsabdeckung.

Besonders zweckmäßig ist es nach einer Ausführungsform der Erfindung dabei, dass die Durchmesser der Hülsen zum Bilden einer verschiebbaren Spielpassung aufeinander abgestimmt sind. Nötigenfalls können entlang der Fugen zwischen den Hülsen auch eine oder mehrere Dichtungen, insbesondere Dichtringe, angeordnet sein. Hierdurch kann besonders zuverlässig ein Eindringen von Feuchtigkeit und Schmutz in den Gewindebereich an der Stellschraube verhindert werden.

Eine weitere vorteilhafte Ausführungsform der Erfindung besteht darin, dass die Umfangsabdeckung ein flexibles Abdeckelement aufweist, insbesondere einen Faltenbalg. Das flexible Abdeckelement kann aus jedem geeigneten flexiblen Material hergestellt sein, insbesondere einem flexiblen Kunststoffmaterial oder einem vorzugsweise beschichteten Textilmaterial. Das flexible Abdeckelement kann dabei auch in Kombination mit einer Teleskophülsenanordnung eingesetzt werden, wobei es die Teleskophülsenanordnung zusätzlich umgibt. Hierdurch kann ein besonders guter Schutz gegenüber äußeren Umgebungseinflüssen erzielt werden.

Zum Schließen der Hydraulikkupplung kann die Stellschraube unmittelbar durch eine Bedienperson betätigt werden. Dies umfasst zunächst ein unmittelbares manuelles Betätigen der Stellschraube direkt von Hand, über ein passives, nicht angetriebenes Werkzeug oder ein energetisch angetriebenes Werkzeug. Insbesondere ist es nach einer Weiterbildung der Erfindung vorteilhaft, dass die Schraubbewegung durch eine Bedienperson unmittelbar oder durch ein Verschraubungswerkzeug ausübbar ist, insbesondere einen Schraubenschlüssel oder ein Verschraubungsgerät, vorzugsweise einen Akkuschrauber.

Grundsätzlich kann die Teleskophülsenanordnung auch als eine Linearführung zum Führen der Stellplatte ausgebildet sein. Besonders zweckmäßig ist es nach einer Weiterbildung der Erfindung, dass an dem ersten Kupplungsteil mindestens eine Linearführung ausgebildet ist, an welcher die Stellplatte verschiebbar zwischen der Aufsatzposition und der Verbindungsposition gelagert ist. Hierdurch kann eine besonders exakte Zusammenführung der beiden Kupplungsteile erreicht werden.

Eine weitere bevorzugte Ausgestaltung der Erfindung liegt darin, dass die Linearführung mindestens eine, vorzugsweise zwei zueinander beabstandete Führungssäulen aufweist. Die mindestens eine Führungssäule kann vorzugsweise an dem ersten Kupplungsteil fest angebracht sein. Daran verschiebbar ist die Stellplatte gelagert, an welcher das zweite Kupplungsteil zur Anlage kommt. Zusätzlich können an einem oder beiden Kupplungsteilen noch ein oder mehrere Justierzapfen bzw. zugehörige Justieraufnahmelöcher ausgebildet sein, um in einer letzten Phase des Zusammenschiebens zwischen den beiden Kupplungsteilen eine sehr genaue Positionierung sicher zu stellen. Dies schont die empfindlichen Leitungsstecker.

Ein exaktes Zusammenführen der beiden Kupplungsteile wird nach einer Weiterbildung der Erfindung noch dadurch unterstützt, dass an dem Stellglied eine Fixiereinrichtung zum Fixieren und Positionieren des zweiten Kupplungsteiles an dem Stellglied angeordnet ist, wobei die Fixiereinrichtung vorzugsweise ein oder mehrere Anschlagleisten aufweist. Die Anschlagleisten können auch als Anschlagschultern oder Anschlagbolzen ausgeführt sein. Hierdurch kann erreicht werden, dass das zweite Kupplungsteil in einer exakten Position an dem Stellglied anliegt und genau positioniert ist. Die Fixiereinrichtung kann weiterhin eine Befestigungseinrichtung umfassen, mit welcher neben einer Justierung auch eine Lagesicherung des zweiten Kupplungsteiles an dem Stellglied erreicht werden kann.

Die Erfindung wird nachfolgend anhand von einem bevorzugten Ausführungsbeispiel näher beschrieben, welches schematisch in den Zeichnungen dargestellt ist. In den Zeichnungen zeigen:
- Fig. 1: eine schematische Querschnittsansicht durch das erste Kupplungsteil mit Stelleinrichtung einer erfindungsgemäßen Hydraulikkupplung;
- Fig. 2: eine schematische Querschnittsansicht durch ein zweites Kupplungsteil für die erfindungsgemäße Hydraulikkupplung;
- Fig. 3: eine schematische Querschnittsansicht der beiden Kupplungsteile nach den Figuren 1 und 2 in einem zusammengesetzten Zustand, wobei die Hydraulikkupplung geöffnet ist; und
- Fig. 4: eine Querschnittsansicht durch die Hydraulikkupplung von Fig. 3 in einem geschlossenen Zustand.

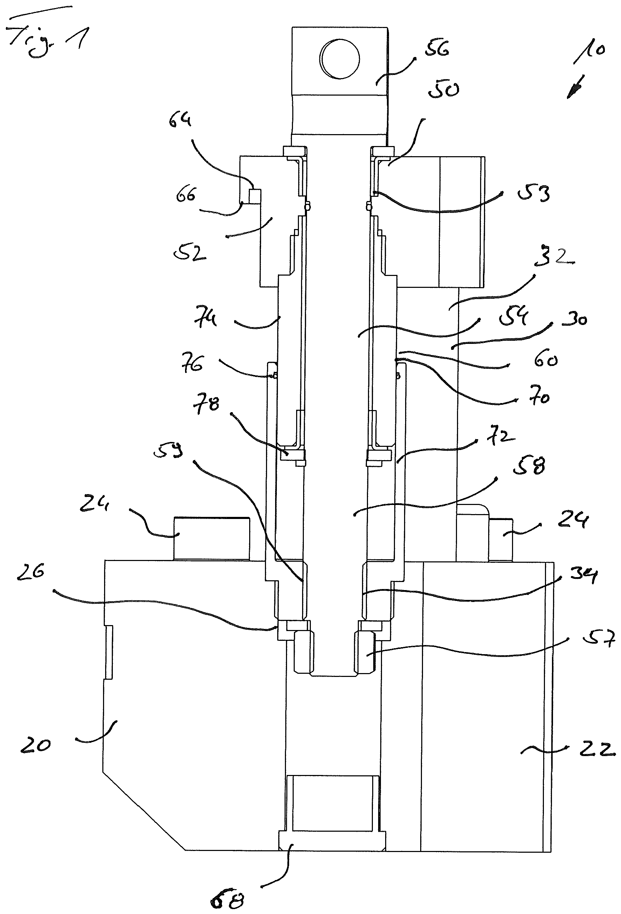

Gemäß Fig. 1 umfasst eine erfindungsgemäße Hydraulikkupplung 10 ein erstes Kupplungsteil 20 mit einem blockartigen ersten Grundkörper 22. In dem ersten Grundkörper 22 des ersten Kupplungsteiles 20 sind mehrerer erste Leitungsstecker 24 angeordnet, welche als männliche Leitungsstecker 24 ausgebildet sind, die an einer Oberseite des ersten Kupplungsteils 20 nach oben vorstehen.

An dem ersten Kupplungsteil 20 ist eine Stelleinrichtung 50 zum Zustellen eines in Fig. 1 nicht dargestellten zweiten Kupplungsteils angeordnet. Die Stelleinrichtung 50 weist ein oberes, etwa plattenförmiges Stellglied 52 mit einem Durchgangsloch 53 auf, durch welches sich eine Stellschraube 54 bis in eine Aufnahmeöffnung 26 in dem ersten Kupplungsteil 20 erstreckt.

Die Stellschraube 54 ist von einer hülsenartigen Umfangsabdeckung 60 umgeben, welche im konkret gezeigten Ausführungsbeispiel als eine Teleskophülsenanordnung 70 ausgebildet ist. Diese Teleskophülsenanordnung 70 weist eine untere erste Hülse 72, welche über Außengewinde in ein Gewinde an der Aufnahmeöffnung 26 des ersten Grundkörpers 22 eingeschraubt ist, und eine zweite Hülse 74 auf, welche an einem Gewinde des Durchgangslochs 53 an dem Stellglied 52 angeschraubt ist.

Ein Außendurchmesser der zweiten Hülse 74 ist passend zu einer Innenöffnung der ersten Hülse 72 derart ausgebildet, dass die zweite Hülse 74 relativ in und zu der ersten Hülse 72 verschiebbar gelagert und geführt ist. Durch diese Teleskophülsenanordnung 70 ist ein Schaftbereich 58 der Stellschraube 54 vor dem Eintritt vor Feuchtigkeit und/oder Schmutz aus der Umgebung geschützt. Zur Verbesserung des Schutzes gegenüber Feuchtigkeit und Schmutz kann vorzugsweise ein Dichtring 76 zwischen der ersten Hülse 72 und/odert der zweiten Hülse 74 angeordnet sein. Über eine Festlegeeinrichtung 78 kann die zweite Hülse 74 axial fest, aber drehbar an der Stellschraube 52 gelagert sein.

An einem unteren Abschnitt des Schaftbereiches 58 ist ein Gewinde 59 am Außenumfang ausgebildet, welches in ein Gewinde 34 am Kupplungsteil 20 eingreift. Im dargestellten Ausführungsbeispiel ist das Gewinde 34 an einem Innenbereich der ersten Hülse 72 eingebracht, welche fest an dem ersten Grundkörper 22 des ersten Kupplungsteils 20 eingeschraubt ist.

Am unteren Ende der Stellschraube 54 kann ein Anschlagelement 57, insbesondere eine Anschlagmutter, angebracht sein, durch welche die Stellschraube 54 an dem zweiten Kupplungsteil 20 gehalten ist. Die Aufnahmeöffnung 26 in dem ersten Grundkörper 22 kann als eine Durchgangsbohrung ausgeführt sein, deren unteres Ende vorzugsweise mit einer Kappe 68 verschlossen ist.

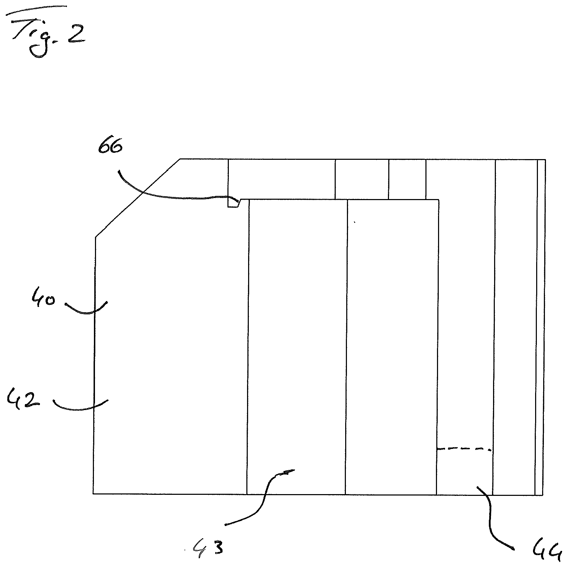

Zum Aufnehmen und Positionieren eines anzuschließenden zweiten Kupplungsteils 40, welches in Fig. 2 dargestellt ist, ist an dem Stellglied 52 eine Fixiereinrichtung 64 mit mindestens einer Anschlagleiste 66 ausgebildet. Sowohl an dem Stellglied 52 als auch an dem daran anzulegenden zweiten Kupplungsteil 40 können korrespondierende Anschlagleisten 66 ausgebildet sein, wie den Figuren 1 und 2 zu entnehmen ist.

Das zweite Kupplungsteil 40 gemäß Fig. 2 weist einen zweiten blockartigen oder plattenförmigen Grundkörper 42 auf, in welchem ein vorzugsweise mittiges Aufnahmeloch 43 ausgebildet ist, in welchem bei einem seitlichen Einsetzen die Stellschraube 54 mit der Umfangsabdeckung 60 aufgenommen werden kann. Weiterhin sind an dem zweiten Kupplungsteil 40 vorzugsweise in rückversetzten Aufnahmebohrungen nur schematisch angedeutete zweite (weibliche) Leitungsstecker 44 angeordnet, welche korrespondierend und passend zu den ersten Leitungssteckern 24 an dem ersten Kupplungsteil 20 angeordnet und ausgebildet sind.

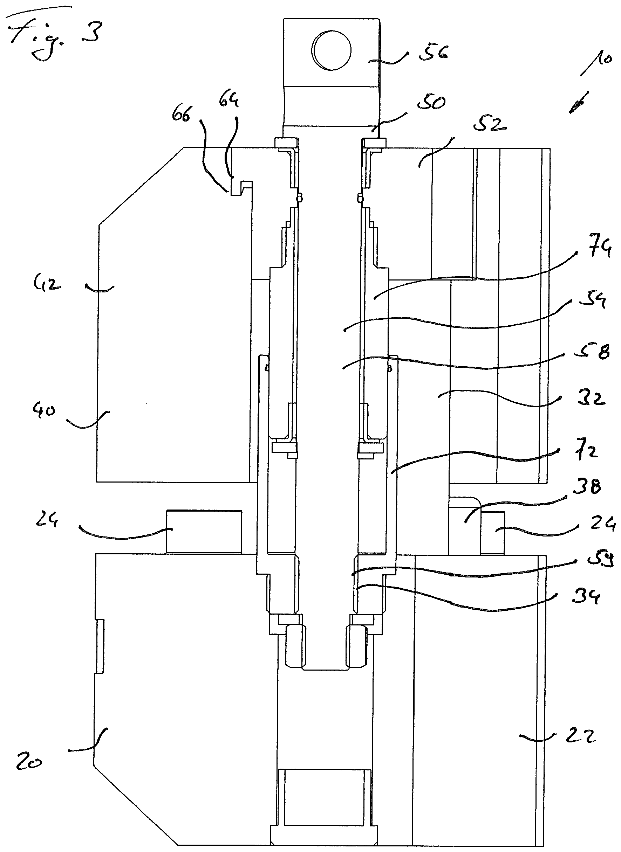

Das zweite Kupplungsteil 40 kann von einem Bediener manuell an die Stellplatte 52 der Stelleinrichtung 50 an dem ersten Kupplungsteil 20 angesetzt werden, wie in Fig. 3 verdeutlicht ist. Durch die Fixiereinrichtung 64 mit den Anschlagleisten 66 kann eine Positionierung und Lagefixierung des zweiten Kupplungsteils 40 an der Stelleinrichtung 50 erfolgen. In dieser vorpositionierten Lage fluchten die korrespondierenden Leitungsstecker 24, 44 miteinander.

Durch Aufbringen einer Dreh- oder Schraubbewegung auf einen oberen Kopfbereich 56 der Stellschraube 54 wird die Stellschraube 54 zusammen mit dem daran axial fest angeordneten Stellglied 52 und dem wiederum daran axial fest angelegten zweiten Kupplungsteil 40 nach unten in Richtung auf das erste Kupplungsteil 20 bewegt. Dabei kämmt das äußere Gewinde 59 am unteren Abschnitt des Schaftbereiches 58 mit dem inneren Gewinde 34 an dem zweiten Kupplungsteil 20.

Somit wird die Schraub- oder Drehbewegung von dem Kopfbereich 56 der Stellschraube 54 in eine Axialbewegung umgesetzt, wobei die Axialbewegung durch eine Linearführung mit mindestens einer Führungssäule 32, welche sich zwischen dem ersten Grundkörper 22 und dem Stellglied 52 erstreckt. Mit dieser axialen Verschiebebewegung wird auch die zweite Hülse 74 der Teleskophülsenanordnung 70 in die erste Hülse 72 geschoben, so dass ein Schaftbereich 58 der Stellschraube 54 vor Umgebungseinflüssen auch während der Verschiebebewegung geschützt ist.

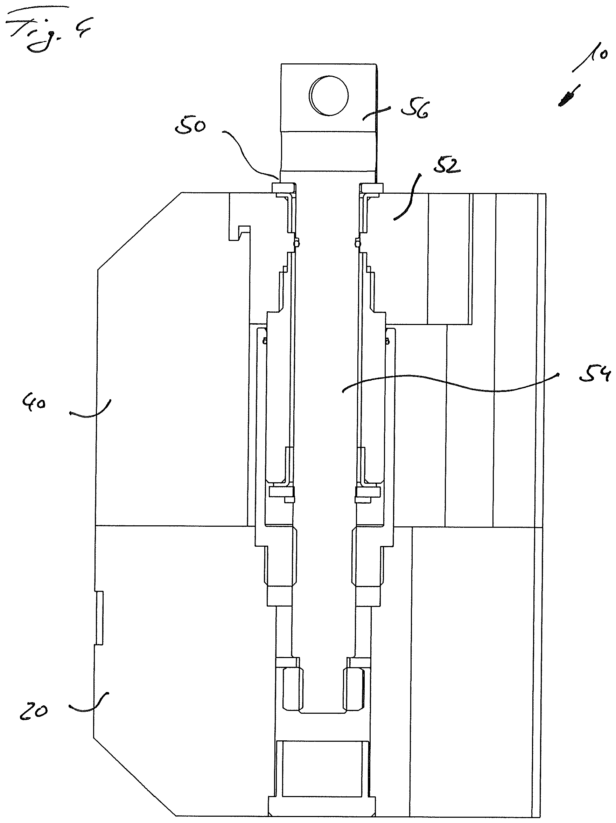

Durch diese Axialbewegung werden das erste Kupplungsteil 20 und das zweite Kupplungsteil 40 axial gegeneinander gedrückt, wobei über ein Zusammenschieben der Leitungsstecker 24, 44 die in den Figuren nicht dargestellten Druckfluidleitungen zu den einzelnen Leitungssteckern 24, 44 miteinander verbunden werden. Der geschlossene Zustand der Hydraulikkupplung 10 ist in Fig. 4 gezeigt.

Durch eine entsprechende entgegengesetzte Schraubbewegung der Stellschraube 54 können die beiden Kupplungsteile 20, 40 wieder in entsprechender Weise voneinander gelöst werden.

## Patentansprüche

1. Manuell betätigbare Hydraulikkupplung (10) mit
- einem stationären ersten Kupplungsteil (20) mit mindestens einem ersten männlichen oder weiblichen Leitungsstecker (24), der mit einer Druckfluidleitung verbunden ist,
- einem beweglichen zweiten Kupplungsteil (40) mit mindestens einem zweiten weiblichen beziehungsweise männlichem Leitungsstecker (44), der mit einer Druckfluidleitung verbunden ist und passend zum ersten Leitungsstecker (24) ausgebildet ist, wobei in einem zusammengesteckten Zustand über die beiden Leitungsstecker (24, 44) eine Leitungsverbindung zwischen der jeweiligen Druckfluidleitung gebildet ist, und
- einer Stelleinrichtung (50), mit welcher die beiden Kupplungsteile (20, 40) von einer Bedienperson zwischen einer Aufsatzposition, bei welcher das bewegbare zweite Kupplungsteil (40) von Hand auf das erste Kupplungsteil (20) mit fluchtenden Leitungssteckern (24, 44) aufgesetzt ist, und einer Verbindungsposition verstellbar ist, in welcher die beiden Kupplungsteile (20, 40) aufeinander zugestellt und der mindestens eine erste Leitungsstecker (24) mit dem mindestens einen zweiten Leitungsstecker (44) zum Bilden der Leitungsverbindung zusammengesteckt sind,
**dadurch gekennzeichnet,**
- **dass** die Stelleinrichtung (50) mindestens ein Stellglied (52) aufweist, welches verschiebbar zu dem ersten Kupplungsteil (20) gelagert ist und an welchem das zweite Kupplungsteil (40) in der Aufsatzposition anlegbar ist, und
- **dass** die Stelleinrichtung (50) mindestens eine Stellschraube (54) aufweist, mit welcher zum Bilden der Leitungsverbindung zwischen den Druckfluidleitungen das Stellglied (52) mit dem anliegenden zweiten Kupplungsteil (40) durch eine Schraubbewegung von der Aufsatzposition in die Verbindungsposition verstellbar ist.

2. Manuell betätigbare Hydraulikkupplung nach Anspruch 1,
**dadurch gekennzeichnet,**
**dass** die mindestens eine Stellschraube (54) in ein Gewinde (34) an dem ersten Kupplungsteil (20) eingreift und sich die Stellschraube (52) durch ein Durchgangsloch (53) an dem Stellglied (52) erstreckt, wobei ein Kopfbereich (56) der Stellschraube (54) zum Betätigen der Stellschraube (54) auf einer Oberseite des Stellgliedes (52) freiliegt.

3. Manuell betätigbare Hydraulikkupplung nach Anspruch 1 oder 2,
**dadurch gekennzeichnet,**
**dass** ein Schaftbereich (58) der Stellschraube (54), insbesondere zwischen dem Gewindeloch (34) und dem Stellglied (52) oder einem Kopfbereich (56) der Stellschraube (54), durch eine Umfangsabdeckung (60) abgedeckt ist.

4. Manuell betätigbare Hydraulikkupplung nach Anspruch 3,
**dadurch gekennzeichnet,**
**dass** die Umfangsabdeckung (60) durch eine Teleskophülsenanordnung (70) gebildet ist.

5. Manuell betätigbare Hydraulikkupplung nach Anspruch 4,
**dadurch gekennzeichnet,**
**dass** die Teleskophülsenanordnung (70) eine feststehende erste Hülse (72), welche an dem ersten Kupplungsteil (20) angebracht ist, und mindestens eine dazu bewegliche zweite Hülse (74) aufweist, welche sich zum Kopfbereich (56) der Stellschraube (54) erstreckt.

6. Manuell betätigbare Hydraulikkupplung nach Anspruch 5,
**dadurch gekennzeichnet,**
**dass** die Durchmesser der Hülsen (72, 74) zum Bilden einer verschiebbaren Spielpassung aufeinander abgestimmt sind.

7. Manuell betätigbare Hydraulikkupplung nach einem der Ansprüche 3 bis 6,
**dadurch gekennzeichnet,**
**dass** die Umfangsabdeckung (60) ein flexibles Abdeckelement aufweist, insbesondere einen Faltenbalg.

8. Manuell betätigbare Hydraulikkupplung nach einem der Ansprüche 1 bis 7,
**dadurch gekennzeichnet,**
**dass** die Schraubbewegung durch eine Bedienperson unmittelbar oder durch ein Verschraubungswerkzeug ausübbar ist, insbesondere einen Schraubenschlüssel oder ein Verschraubungsgerät, vorzugsweise einen Akku-Schrauber.

9. Manuell betätigbare Hydraulikkupplung nach einem der Ansprüche 1 bis 8,
**dadurch gekennzeichnet,**
**dass** an dem ersten Kupplungsteil (20) mindestens eine Linearführung (30) ausgebildet ist, an welcher das Stellglied (52) verschiebbar zwischen der Aufsatzposition und der Verbindungsposition gelagert ist.

10. Manuell betätigbare Hydraulikkupplung nach Anspruch 9,
**dadurch gekennzeichnet,**
**dass** die Linearführung (30) mindestens eine, vorzugsweise zwei zueinander beabstandete Führungssäulen (32) aufweist.

11. Manuell betätigbare Hydraulikkupplung nach einem der Ansprüche 1 bis 10,
**dadurch gekennzeichnet,**
**dass** an dem Stellglied (52) eine Fixiereinrichtung (64) zum Fixieren und Positionieren des zweiten Kupplungsteiles (40) an dem Stellglied (52) angeordnet ist, wobei die Fixiereinrichtung (64) vorzugsweise eine oder mehrere Anschlagleisten (66) aufweist.
